# EUROPEAN PATENT SPECIFICATION

(11) **EP 1 816 651 B1**
(45) Date of publication and mention of the grant of the patent: **04.09.2013**
(21) Application number: 07352001.7
(22) Date of filing: 02.02.2007
(51) Int. Cl.: G11B 33/08

(54) **Structure intended to be connected to a referential through the intermediary of external connection means and including an apparatus permitting the vibrations thereof to be reduced**
Struktur zum Zweck der Verbindung an eine Bezugseinheit über dazwischenliegende äußere Verbindungsmittel mit einer Vorrichtung, die die Reduzierung von Schwingungen ermöglicht
Structure prévue pour être connectée à un référentiel par l'intermédiaire de moyens de connexion externes et incluant un appareil permettant de réduire ses vibrations

(30) Priority: 07.02.2006 FR 0601051
(43) Date of publication of application: 08.08.2007
(73) Proprietor: Barcoview Texen, 31037 Toulouse Cedex 01 (FR)
(72) Inventor: Blandin, Laurent, 31037 Toulouse Cedex 01 (FR)
(74) Representative: Hartmann, Jean-Luc

(56) References cited:
- EP-A- 0 380 304
- WO-A-03/060343
- DE-B3- 10 233 023
- US-A- 3 448 951
- US-A- 5 595 371
- PATENT ABSTRACTS OF JAPAN vol. 016, no. 529 (M-1332), 29 October 1992 (1992-10-29) -& JP 04 197745 A (KATSUYUKI KIDOKORO), 17 July 1992 (1992-07-17)

## Description

The present invention relates to the field of structures intended to be connected to a referential through the intermediary of external connection means, and of which structure it is sought to reduce the vibrations, such as, for example, to limit the resonance of a structure, more especially but not exclusively a structure of the chassis type comprising associated electronic equipment, for example electronic cards or modules. The referential may be fixed or displaceable relative to the ground. The means for externally connecting the structure to the referential may include rigid connection means or resilient connection means or viscoelastic connection means.

The electronic modules, incorporated in a structure of the chassis type, are generally subject, on the one hand, to the vibrations generated by the vehicle on which they are mounted, for example a boat, an aeroplane, a vehicle with wheels or a vehicle with caterpillar tracks, and, on the other hand, to the resonances of the structure itself which amplifies the vibratory level at the various resonance frequencies of the elements which form the structure or parts thereof.

Prior art discloses means for attenuating the vibratory levels at the inlet of the structure, by using shock absorbers outside the structure and connecting this structure, for example, to the vehicle which carries it, but that has no effect on the vibratory level caused by resonances of the structure itself, or of the elements which form it, or of the parts thereof.

One solution consists of using a resilient material of the polymer type associated, by gluing, with a precise location of the structure in order to attenuate the resonance thereof. The material of the polymer type converts the mechanical energy, induced by the vibrations, into heat by displacing the molecules inside the material. Such a solution has the disadvantage of necessitating a large amount of material of the polymer type in order to obtain a significant reduction in the vibration amplitude of the structure onto which it is glued. Moreover, the effectiveness of such a solution is generally limited to high frequencies.

Document WO-A-2003/060343 describes a structure intended to be connected to a referential through the intermediary of external connection means, the structure including at least one apparatus which differs from said external connection means, said apparatus permitting the vibrations of said structure to be reduced, and comprising :
- rigid support means,
- first connection means, between said rigid support means and said structure, so as to establish a free space between said rigid support means and a first wall of said structure, defining, at rest, a specific distance between the rigid support means and said first wall, capable of being modified by the effect of a vibration of said wall,
- resilient shock-absorbing means, disposed in a stressed state in the free space established between the rigid support means and the first wall, and in contact therewith, so as to establish a second resilient connection, between a portion of the rigid support means and a portion of said first wall of the structure, in the area of contact with the resilient shock-absorbing means.

Such a structure can however be improved concerning the connection for the resilient shock absorbing means.

The problem to be solved by the present invention is to increase the mountability of the structure according to the nearest prior art and to decrease the vibrations of the structure during operation.

According to the invention, a structure with the features according to the above mentioned nearest prior art is further characterised in that :
- it includes an intermediate supporting plate disposed, in said free space, between said resilient shock-absorbing means and said first wall, said resilient shock-absorbing means being disposed in an initially stressed state in said free space with a complete connection means between said intermediate supporting plate and said resilient shock-absorbing means and between said intermediate supporting plate and said first wall,
- whereby a first face of said support means is in contact with said resilient shock-absorbing means, and a second face of said rigid support means, opposite the first face, is connected, by contact, to a second wall of said structure or an element associated with the latter, so as to become part of said first connection means between the rigid support means and the structure, and
- whereby the resilient shock-absorbing means are connected to the rigid support means and to the intermediate supporting plate by a complete connection, so that the rigid support means can assume at least two positions, a first position, called the inoperative position, in which the resilient shock-absorbing means are relaxed, and a second position, called the operative position, in which the resilient shock-absorbing means are in an initially stressed state when they are in contact with the second wall of said structure or an element associated with the latter.

The intermediate supporting plate permits the compression force, exerted by the resilient shock-absorbing means, to be distributed uniformly over a given surface, that of the supporting plate, when said resilient shock-absorbing means are in the form of a plurality of compression springs, for example.

The contact of the first face with said resilient shock-absorbing means permits the specific first connection to be established via a second wall of the structure or via an element associated therewith, in particular an electronic module or the like of the contact connection type, and thus also permits, in this latter case, in addition, the apparatus, which permits the vibrations of the structure to be reduced, to assume a function of thermal dissipation or of transferring the heat generated by the electronic module towards the structure, on condition that the thermal conduction is then ensured by said apparatus between the electronic module and the structure.

The connection by contact is an obstacle type of connection in one direction perpendicular to the wall, in which direction the resilient shock-absorbing means are displaced; in a perpendicular direction thereto, that is to say in the plane of the wall, the first connection can include a degree of freedom, for example in translation in the case of a connection by contact, since the resilient shock-absorbing means are not intended to operate in such a direction so as to reduce the vibrations of the wall.

The resilient shock-absorbing means connected to the rigid support means and to the intermediate supporting plate by a complete connection gives a configuration of the apparatus, permitting the vibrations of the structure to be reduced, which configuration aims to facilitate the mounting of said apparatus in the structure, in contact with the second wall of said structure or an element associated with the latter.

According to an advantageous feature, in the operative position said first connection means are formed by complete rigid connection means between said rigid support means and said structure, said resilient shock-absorbing means being disposed in a stressed state in said free space, established between the rigid support means and said first wall, between two surfaces respectively facing the rigid support means and said first wall.

The rigid connection allows rigid fixing of the support means, which could possibly be controllable so as to permit a control of the stress or initial stress of the resilient shock-absorbing means. As indicated above, the complete rigid connection means must permit a possibility for deforming the wall relative to the rigid support means. It is possible to envisage other connection types, for example a partial rigid connection by a simple support as opposed to a complete rigid connection of the embedding type, giving various deformations to the wall relative to the rigid support means, to the extent where a relative displacement, between these elements, perpendicular to the surface of the wall, is possible so as to displace the resilient shock-absorbing means. The person skilled in the art, by using this knowledge, will be able to adapt the best choice of connection relative to a given structure and to the desired results for reducing the vibrations.

According to an advantageous feature, a first face of said rigid support means is in contact with said resilient shock-absorbing means, and a second face of said rigid support means, opposite the first face, is a surface free of any contact with an element of the structure or connected thereto.

This feature allows the apparatus, which permits the vibrations of said structure to be reduced, to be mounted on a wall of the latter, free of any contact with elements fitted in the structure or with other elements of the structure.

According to an advantageous feature, said resilient shock-absorbing means include a plurality of compression springs, a first end of said compression springs being in contact with said intermediate supporting plate, and a second end of said compression springs, opposite the first end, being in contact with said rigid support means. According to the chosen tenseness of the springs, the plurality of compression springs permit the vibrations to be attenuated or filtered at lower frequencies than the resilient material of the polymer type of prior art. The tenseness of the apparatus permitting the vibrations of the structure to be reduced may also be modulated with the number of springs chosen. It is equally possible to combine, on one and the same apparatus, springs of different degrees of tenseness. The solution of the compression spring permits a wider choice of different degrees of tenseness to be available than the solution of the resilient material of the polymer type of prior art.

According to an advantageous feature, the resilient shock-absorbing means include a plurality of flexible strips and the resilient strips of the plurality of strips each assume substantially an S- or Z-shaped form, a first branch of the S or of the Z being fixed to the rigid support means, and the second branch of the S or of the Z being fixed to the intermediate supporting plate or to said wall.

According to an advantageous feature, the flexible strips of said plurality of strips each assume a symmetrical form relative to a plane parallel to the intermediate supporting plate.

Other features and advantages will appear on reading the following description of several examples of embodiments of a structure according to the invention, such description being accompanied by the attached drawings :
Figure 1 is a side elevational view of a first embodiment of a partial structure according to the prior art, which includes an apparatus permitting the vibrations of the structure to be reduced, at rest.
Figure 2 is a side elevational view of the example in Figure 1, in action.
Figure 3 is a side elevational view of a second embodiment of a partial structure according to the invention, which includes an apparatus permitting the vibrations of the structure to be reduced, at rest, in a first position prior to being mounted.
Figure 4 illustrates the example in Figure 3 in its position after being mounted, at rest.
Figure 5 is a side elevational view of a third embodiment of a partial structure according to the invention, including an apparatus permitting the vibrations of the structure to be reduced, at rest.

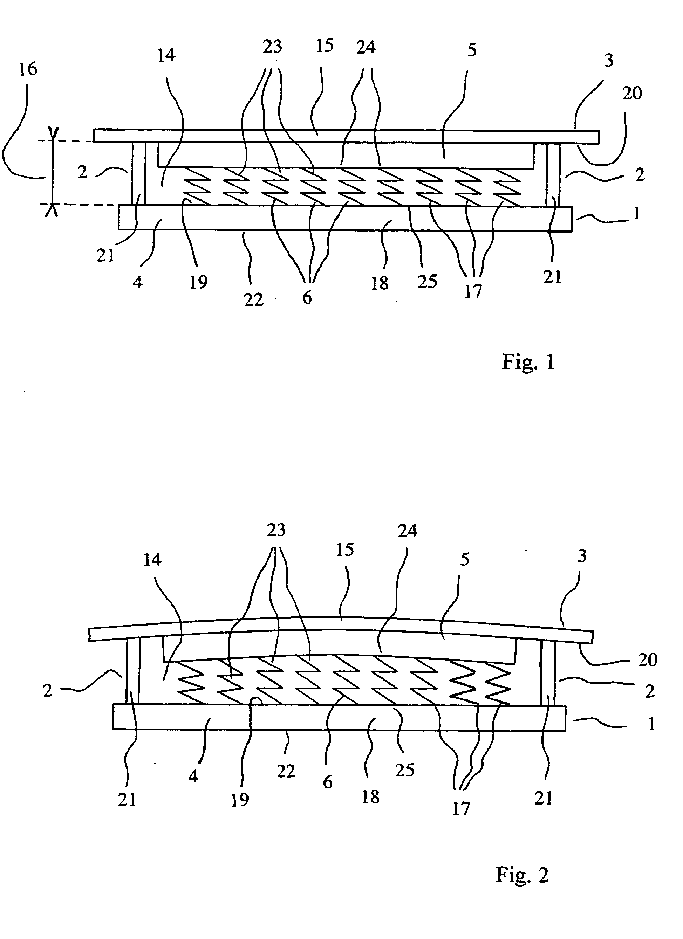

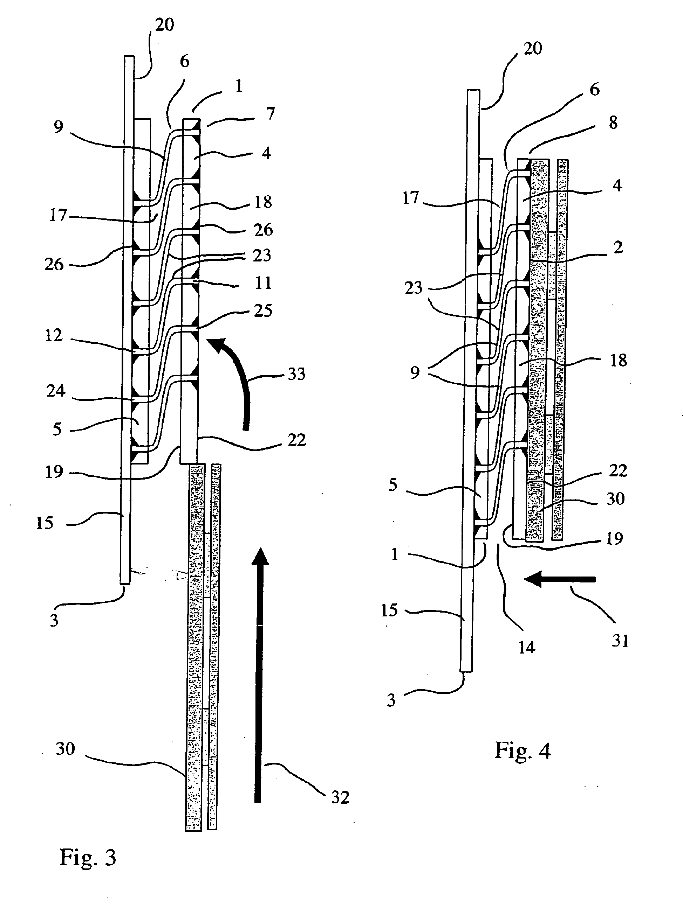

The structure 3, partially illustrated in Figures 2 and 3, includes an apparatus 1 which permits the vibrations of this structure 3 to be reduced, and comprises:
- rigid support means 4,
- first connection means 2, between the rigid support means 4 and the structure 3, so as to establish a free space 14 between the rigid support means 4 and a first wall 15 of the structure 3, defining, at rest, a specific distance 16 between the rigid support means 4 and the first wall 15, capable of being modified by the effect of a vibration of the wall 15, as illustrated in Figure 2,
- resilient shock-absorbing means 6, advantageously disposed in an initially stressed state in the free space 14 established between the rigid support means 4 and the first wall 15, and in contact therewith, so as to establish a second resilient connection 17, between a portion of the rigid support means 4 and a portion of the first wall 15 of the structure 3, in the area of contact with the resilient shock-absorbing means 6.

The structure 3 (not illustrated completely) may be any structure of the chassis, on-board, portable or fixed type, which defines an enclosure surrounding an electronic unit composed, for example, of electronic modules or cards (not illustrated), assuming for example a polyhedral, generally parallelepiped, form which includes a plurality of flat, horizontal, vertical, and/or inclined walls, one of these walls, 15, being illustrated in Figures 1 and 2, on which the apparatus 1 is fixed. The wall 15 of the structure 3 is, for example, a vertical wall of the structure, but the apparatus could be mounted on other walls, horizontal walls or different walls of the structure, alternatively or additionally, by using the desired results of vibratory weakness. The apparatus 1 illustrated will advantageously be secured in an area of the wall 15 which generates the greatest vibration amplitude at the resonance frequency of the wall, which may, for example, be situated in the area which is the furthest remote from the edges of the wall 15, which are connected to other walls of the structure, or in an accessible area close to said structure, depending on the space available in the structure. In a preferential manner, the apparatus 1 will be placed inside the structure in order to be protected from shocks, more especially caused by the walls. One apparatus is necessary for one wall, but several apparatuses 1 could be used on one and the same wall, depending on the dimensions thereof. The effectiveness of the apparatus 1 extends to the other connected walls (not illustrated) of the structure, due to the diminution in the amplitude of the vibrations of the wall 15 on which it is fixed, and thus extends to all of the structure 3. The structure 3 is intended to be connected to a fixed or displaceable referential, for example the ground or a vehicle intended to move relative thereto, through the intermediary of external connection means, which differ from the apparatus 1. These means for externally connecting the structure 3 to the referential may include any known means, such as, for example, rigid connection means or resilient connection means or viscoelastic connection means or simply a connection by obstacle of the simple supporting type.

The rigid support means 4 will advantageously assume the form of a plate 18, as illustrated in Figures 1 and 2, which is rigid in that it does not have to become deformed in an identical manner to the wall 15, in order that the resilient shock-absorbing means 6, being supported on a face 19 of the plate 18, can themselves become deformed. It is necessary to select a plate, the resonance frequency of which is different from that of the wall in the structure 3, or of which the deformations at this resonance frequency are different. The surface of the plate 18 will be defined according to the extent of the surface occupied by the resilient shock-absorbing means 6 and the space available, as will be explained hereinafter, and will be able to assume a rectangular form, for example. The constituent material of the plate 4 may be any material which is sufficiently rigid to fulfil the function explained above, for example a plastics material, a metallic material or other material.

In an advantageous manner, the first connection means 2 are formed by complete rigid connection means between the rigid support means 4 and the structure 3, the resilient shock-absorbing means 6 being advantageously disposed in an initially stressed state in the free space 14, established between the support means 4 and the first wall 15, between two surfaces 19, 20 respectively facing the rigid support means 4 and the first wall 15.

The complete rigid connection means between the rigid support means 4 and the structure 3 may, for example, assume the form of a connection by columns 21, screwed into the plate 18 and into the wall 15. It is necessary to note that the deformation of the wall portion 15 facing the plate 18 can be modified provided that the first connection means 2 are of the embedding type, or of the simple supporting type which can allow a displacement of the rotary type for the wall 15 about the foot of the column 21, said rotary displacement being induced by the deformation of the wall subsequent to the vibrations to which it is subject.

The apparatus 1, illustrated in Figures 1 and 2, may include an intermediate supporting plate 5 disposed, in the free space 14, between the resilient shock-absorbing means 6 and the first wall 15, serving to support the resilient shock-absorbing means 6. The apparatus 1 includes, in this case for example, complete connection means (not illustrated) between the intermediate supporting plate 5 and the resilient shock-absorbing means 6, as we shall see hereinafter, and between the intermediate supporting plate 5 and the first wall 15, for example by screws or the like. Thus, the intermediate supporting plate 5 is made totally integral with the wall 15. It is necessary to note that the intermediate supporting plate 5 is optional; it permits the forces, exerted by the resilient shock-absorbing means, to be distributed uniformly over the surface of the plate, and can permit the initial stress of the resilient shock-absorbing means 6 to be controlled according to its thickness, for a given height of column 21.

On the apparatus illustrated in Figures 1 and 2, a first face 19 of the rigid support means 4 is in contact with the resilient shock-absorbing means 6, and a second face 22 of the rigid support means 4, opposite the first face 19, is a surface free of any contact with an element of the structure or connected thereto, as illustrated. The apparatus 1, illustrated in Figures 1 and 2, necessitates, in order to be fixed to the wall 15, a free surface on the wall 15 on the inside of the structure, substantially equal to the surface of the rigid plate 18, and a free space available from this surface 20 and towards the interior of the structure 3 equivalent to the thickness of the plate 18 plus the height of the columns 21, itself being equal to the height of the resilient initially stressed shock-absorbing means 6 plus the thickness of the intermediate supporting plate 5 if necessary.

The resilient shock-absorbing means 6 advantageously include a plurality of compression springs 23, a first end 24 of the compression springs 23 being in contact, in the example illustrated, with the intermediate supporting plate 5, and a second end 25 of the compression springs, opposite the first end 24, being in contact with the rigid support means 4, namely the rigid plate 18, as illustrated in Figures 1 and 2. The springs 23 may be of the helical spring type, the compression axis of which will be disposed perpendicular to the wall 15, as illustrated in Figure 1. The springs 23 may either be kept simply tensioned, during the mounting, between the plate 18 and the intermediate plate 5, the ends being guided into respective appropriate receiving means in these plates, or fixed by their ends, for example by welding, crimping or the like between these same plates, or possibly on a single plate thereof, the plate 18 if the intermediate plate 5 is absent, the springs 23 then being placed in simple direct support on the wall 15 (not illustrated). The compression springs may be metallic, for example, and be identical or different depending on the desired effect for attenuating or for filtering the vibrations.

The example illustrated in Figures 3 and 4 is similar to the example in Figures 1 and 2, and differs essentially therefrom in that a first face 19 of the rigid support means 4 is in contact with the resilient shock-absorbing means 6, and a second face 22 of the rigid support means 4, opposite the first face 19, is connected, by contact, to a second wall (not illustrated) of the structure 3, or to an element 30, associated with the latter as illustrated in Figure 4, so as to form part of the first connection means 2 between the rigid support means 4 and the structure 3. In Figures 3 and 4, when the elements of the apparatus 1 according to the invention have the same function or functions as those of the first example according to Figures 1 and 2, they have the same reference numeral. For these functionally identical elements, the reader will be referred to the description of the first embodiment according to Figures 1 and 2.

Thus, in the example in Figures 3 and 4, the connection 2 between the rigid support means 4 and the structure 3 is not a complete rigid connection, directly on the wall 15 of the structure 3 as in the first example according to Figures 1 and 2, but is a connection by obstacle and by contact with an electronic module or card 30 for example, itself connected to the structure 3 by means of a complete rigid connection (not illustrated) once mounted in the structure 3, this being achieved in known manner, for example, in a slide (not illustrated) provided for this purpose. Thus, once in place, as illustrated in Figure 4, the electronic module 30, which has a specific fixed position relative to the structure, that is to say relative to the wall 15, permits a specific distance to be established between the rigid support means 4 and the first wall 15, which is capable of being modified by the effect of a vibration of this wall 15. The connection 2 by obstacle, which permits the electronic module 30 to be established between the support means 4 and the structure 3, must be achieved in a perpendicular direction 31 to the wall 15, the vibrations of which it is desirable to attenuate, in order for the springs 23 to be able to be compressed or stretched, in this direction 3, according to the vibratory deformation of the wall 15. The connection 2 by contact can permit one or more degrees of freedom in a parallel plane to the wall 15 to the extent where the springs 23 do not operate in this plane.

In the example in Figures 3 and 4, the resilient shock-absorbing means 6 are connected to the rigid support means 4 and to the intermediate supporting plate 5 by a complete connection 26, for example by welding as illustrated, so that the rigid support means 4 can assume at least two positions, a first position 7, called the inoperative position illustrated in Figure 3, in which the resilient shock-absorbing means 6 are relaxed, and a second position 8, called the operative position illustrated in Figure 4, in which the shock-absorbing means 6 are in the advantageously initially stressed state when they are in contact with the element 30 associated with the structure 3.

In the example of Figures 3 and 4, the intermediate supporting plate 5 is advantageously secured to the wall 15 according to any known means, for example by screws, in order to permit the apparatus 1 to be kept in its relaxed position on the wall 15, until the mounting of the electronic module or card 30 which will ensure the initial stress of the springs 23 by displacement of the plate 18 towards the wall 15, thereby entraining the compression of the springs 23. So as to permit a displacement such as the one which will be explained hereinafter, the springs 23 will each advantageously assume a form of a flexible strip 9, for example substantially an S-shaped form (as illustrated in Figures 3 and 4) or a Z-shaped form (not illustrated), a first terminal branch 11 of the S or of the Z being fixed to the rigid support means 4, the second terminal branch 12 of the S or of the Z being fixed to the intermediate supporting plate 5, as illustrated in Figures 3 and 4.

The resilient shock-absorbing means 6 according to the example in Figures 3 and 4 are preferably disposed so as to permit a resilient displacement in translation of the support plate 4 relative to the intermediate supporting plate 5, the latter being parallel or substantially parallel. This is because the electronic modules or cards in an enclosure inside the structure are generally placed, once mounted, in a manner parallel to some of the walls of the chassis and perpendicular to other walls.

As illustrated in Figure 3, an electronic module or card 30 is introduced, for example, by sliding into its receiving means formed in the structure (not illustrated), for example parallel to the wall 15, the vibrations of which it is desirable to reduce. Thus, the resilient shock-absorbing means 6 will advantageously be disposed so that a thrust effort parallel to the collector plate 5, as illustrated by the arrow 32 in Figure 3, and thereupon, entrains a displacement of the plate 18 towards the intermediate supporting plate 5 whilst compressing the flexible strips 9, as illustrated by the arrow 33 in Figure 3 and as will be explained in more detail hereinafter. The support plate 18 may advantageously include a chamfered edge of attack (not illustrated) intended to facilitate the commencement of the sliding of the electronic module or card 30 thereon, during which the resilient means 6 are compressed. In Figure 4, the arrow 31 shows the direction of the force exerted by the electronic module or card 30 on the apparatus 1, perpendicular to the plates 5 and 18, and to the wall 15 of the structure 3.

The form of the flexible strips 9 will advantageously be defined in dependence on the way in which the electronic modules or cards are mounted in the structure 3, with which module or card the apparatus 1 is intended to make contact in order to ensure the connection 2 by obstacle and contact. According to the example illustrated in Figures 3 and 4, the flexible strips 9 of the plurality of strips will each advantageously assume a form such that it permits a displacement to be conferred on the support plate 4 in a direction perpendicular to the intermediate supporting plate 5 and towards the latter, and, in a combined manner, a displacement in a direction parallel to the intermediate supporting plate 5. Thus, the electronic module or card 30, which serves as a link with the structure 3 for the apparatus 1, and slides in its receiving means in the structure 3 during its positioning, will have to abut against the support plate 4 at a specific position at the beginning of the sliding, as illustrated in Figure 3, and, whilst continuing its slide into its receiving means by the action of an operator, the card will have to repel the support plate 4 simultaneously forwardly in the direction of the slide and towards the wall 15 in the direction of the compression of the strips 9, so that the passage for the slide and the positioning of the module or card 30 along its slide axis is released and so that, at the end of the sliding, as illustrated in Figure 4, the support plate 4 is compressed in the desired initially stressed state for the attenuation of the vibrations of the wall 15. The distance between the module or card 30 and the parallel wall 15, defined by the structure 3 itself, permits the distance, available to determine essentially the dimensions of the flexible strips 9, to be defined in dependence on the initial stress that is desirable to exert.

Each strip 9 is, for example, in the form of an S-shaped profiled part, the terminal branches 11 and 12 of the S-shaped profile of which are preferably parallel, one being embedded in the plate 5 and the other being embedded in the plate 18, as illustrated for example in Figure 3 or 4. In the example illustrated in these Figures, the terminal branches of the S-shaped profile are perpendicular to the plates 5, 18 on which they are respectively fixed. The embedded disposition of the terminal branches of the S-shaped profile in each plate 5, 18 will be able to assume a depth equal to or substantially equal to the thickness of the plates, as illustrated in Figures 3 and 4, and will be able to be achieved, in a partial manner, over the length of the flexible strips 9, the strips 9 being welded from the side of the plates 5, 18 in contact with the wall 15 on the one hand, and with the electronic module or card 30 on the other hand, respectively. The length of the S-shaped profiled part for each strip may correspond to a dimension of the plates 5 or 18, and the S-shaped profiled parts are disposed parallel to each other throughout the length of the other dimension of the plates. The flexible strips 9 may touch each other, or may remain remote from each other, an advantage of the system being to permit also a circulation of air in the apparatus 1 between the plates 5 and 18, in a direction parallel to the S-shaped profiled parts forming the strips 9. The abutment of the strips against each other may constitute a stop means for the displacement of the support plate 18 towards the intermediate supporting plate 5. The S-shaped form of the strips permits the parallel disposition of the plates 5 and 18 to be ensured by the principle of a deformable parallelogram.

An additional advantage of the apparatus 1 illustrated in Figures 3 and 4, by mounting said apparatus in contact with an electronic module or card, is to ensure a thermal transfer of a heat flow from this electronic module or card 30 towards the wall 15 of the structure 3, so as to guarantee a cooling of the latter and/or a specific operational temperature. In this case, the apparatus 1 will, of course, have to be a thermal conductor.

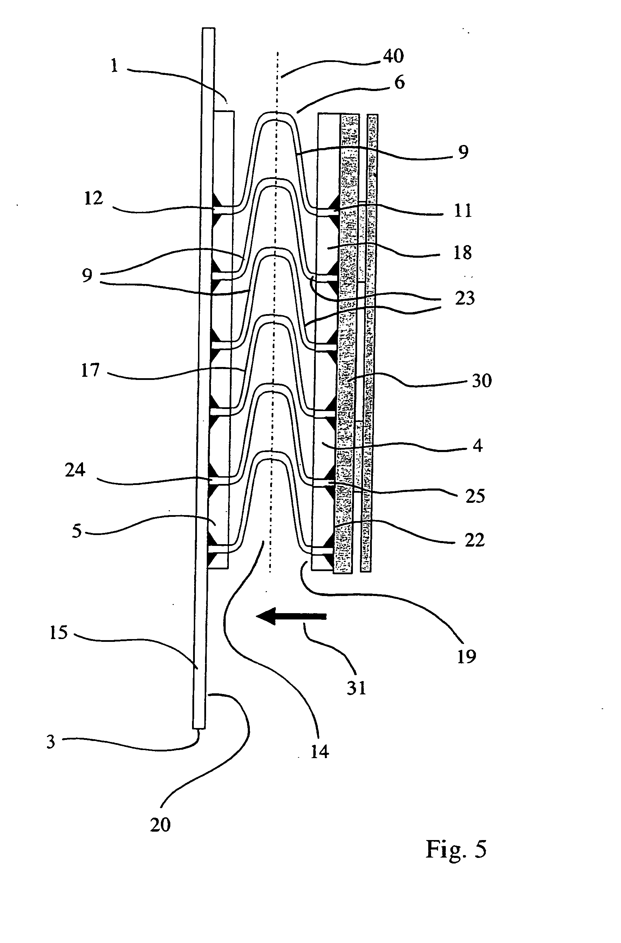

The example illustrated in Figure 5 is similar to the example in Figures 3 and 4, and differs therefrom in that the flexible strips 9 of said plurality of strips each assume a symmetrical form relative to a plane 40 parallel to the intermediate supporting plate 5.

The apparatus 1 according to the third embodiment of a structure according to the invention, illustrated in Figure 5, includes elements operationally identical to those of the example in Figures 3 and 4: these functionally identical elements are given the same reference numeral; for these functionally identical elements, the reader will be referred to the description of the first embodiment according to Figures 1 to 4.

The apparatus 1 illustrated in Figure 5 includes flexible strips 9 of the plurality of strips, each one assuming a symmetrical form relative to the plane 40 parallel to the rigid plates 5 and 18. As illustrated in Figure 5, each strip portion 9, on each side of the plane 40, advantageously assumes the form of a strip 9 of the example in Figures 3 and 4. The flexible strips 9 thus assume, by way of example, a U-shaped form, the ends of the branches of which are made parallel to the base of the U and are embedded respectively in the intermediate supporting plate 5 and the support plate 18, perpendicular thereto as illustrated in Figure 5, so that the plates 5 and 18 are parallel. Thus, the displacement of the support plate 18 relative to the intermediate supporting plate 5 is effected in a direction 31 perpendicular to these plates. Such an apparatus is particularly appropriate when the electronic module or card 30 is placed in its receiving means on the structure 3 by a movement perpendicular to the wall 15 of the structure 3 on which the intermediate supporting plate 5 is fixed, and perpendicular to the plates 18 and 5, such movement being in the direction 31 in Figure 5. In Figure 5, the apparatus 1 is illustrated in the operative position, initially stressed between the module or card 30 and the wall 15 of the structure.

The present invention is used in applications with closed or open structures. The apparatus according to Figures 3 to 5 is used in particularly advantageous applications in structures on board vehicles of all sorts, when a gain in weight has to be achieved, or when the mechanical construction tolerances of the structures are wide, or when a cooling by convection can be combined with a cooling by conduction and with a reduction in the level of vibrations of the structure. The apparatus, which permits the vibrations of the structure on which it is mounted to be reduced, does not require any maintenance and is easily mounted on any structure.

## Claims

1. Structure intended to be connected to a referential through the intermediary of external connection means, the structure including at least one apparatus (1) which differs from said external connection means, said apparatus permitting the vibrations of said structure (3) to be reduced, and comprising :
- rigid support means (4),
- first connection means (2), between said rigid support means and said structure, so as to establish a free space (14) between said rigid support means and a first wall (15) of said structure, defining, at rest, a specific distance (16) between the rigid support means and said first wall, capable of being modified by the effect of a vibration of said wall,
- resilient shock-absorbing means (6), disposed in a stressed state in the free space established between the rigid support means and the first wall, and in contact therewith, so as to establish a second resilient connection (17), between a portion of the rigid support means and a portion of said first wall of the structure, in the area of contact with the resilient shock-absorbing means,
**characterised in that** :
- it includes an intermediate supporting plate (5) disposed, in said free space (14), between said resilient shock-absorbing means (6) and said first wall (15), said resilient shock-absorbing means (6) being disposed in an initially stressed state in said free space (14) with a complete connection means (26) between said intermediate supporting plate (5) and said resilient shock-absorbing means (6) and between said intermediate supporting plate and said first wall (15),
- whereby a first face (19) of said support means (4) is in contact with said resilient shock-absorbing means (6), and a second face (22) of said rigid support means, opposite the first face, is connected, by contact, to a second wall of said structure or an element (30) associated with the latter, so as to become part of said first connection means (2) between the rigid support means and the structure, and
- whereby the resilient shock-absorbing means (6) are connected to the rigid support means (4) and to the intermediate supporting plate (5) by a complete connection, so that the rigid support means can assume at least two positions, a first position (7), called the inoperative position, in which the resilient shock-absorbing means (6) are relaxed, and a second position (8), called the operative position, in which the resilient shock-absorbing means are in an initially stressed state when they are in contact with the second wall of said structure or an element associated with the latter.

2. Structure according to claim 1, **characterised in that**, in the operative position, said first connection means (2) are formed by complete rigid connection means (21) between said rigid support means (4) and said structure (3), said resilient shock-absorbing means (6) being disposed in the stressed state in said free space (14), established between the rigid support means and said first wall, between two surfaces (19, 20) respectively facing the rigid support means and said first wall.

3. Structure according to any of claims 1 to 2, **characterised in that** a first face (19) of said rigid support means (4) is in contact with said resilient shock-absorbing means (6), and a second face (22) of said rigid support means, opposite the first face, is a surface free of any contact with an element of the structure (3) or connected thereto.

4. Structure according to any of claims 1 to 3, **characterised in that** said resilient shock-absorbing means (6) include a plurality of compression springs (23), a first end (24) of said compression springs being in contact with said intermediate supporting plate (5), and a second end (25) of said compression springs, opposite the first end, being in contact with said rigid support means (4).

5. Structure according to any of claims 1 to 3, **characterised in that** the resilient shock-absorbing means (6) include a plurality of flexible strips (9).

6. Structure according to claim 5, **characterised in that** the resilient strips (9) of the plurality of strips each assume substantially an S- or Z-shaped form, a first branch (11) of the S or of the Z being fixed to the rigid support means (4), and the second branch (12) of the S or of the Z being fixed to the intermediate supporting plate (5) or to said wall.

7. Structure according to claims 5-6, **characterised in that** the flexible strips (9) of said plurality of strips each assume a symmetrical form relative to a plane (40) parallel to the intermediate supporting plate (5).

## Patentansprüche

1. Struktur, die vorgesehen ist, um mit einem Bezugsteil durch die Vermittlung von externen Verbindungsmitteln verbunden zu werden, wobei die Struktur zumindest ein Gerät (1) enthält, das von den externen Verbindungsmitteln abweicht,
wobei das Gerät es erlaubt, dass die Vibrationen der Struktur (3) reduziert werden, und mit:
- starren Stützmitteln (4),
- ersten Verbindungsmitteln (2) zwischen den starren Stützmitteln und der Struktur, um einen Freiraum (14) zwischen den starren Stützmitteln und einer ersten Wand (15) der Struktur bereit zu stellen, die in Ruhe einen spezifischen Abstand (16) zwischen den starren Stützmitteln und der ersten Wand definieren, und in der Lage sind, durch die Wirkung einer Vibration der Wand verändert zu werden,
- elastischen stoßabsorbierenden Mitteln (6), die in einem angespannten Zustand in dem Freiraum angeordnet sind, der zwischen den starren Stützmitteln und der ersten Wand bereitgestellt wird und damit in Kontakt steht, um eine zweite elastische Verbindung (17) zwischen einem Abschnitt der starren Stützmittel und einem Abschnitt der ersten Wand der Struktur in dem Bereich des Kontaktes mit den elastischen stoßabsorbierenden Mitteln bereit zu stellen,
**dadurch gekennzeichnet,**
- **dass** sie eine mittlere Stützplatte (5) enthält, die in dem Freiraum (14) zwischen den elastischen stoßabsorbierenden Mitteln (6) und der ersten Wandung (15) angeordnet ist, und die elastischen stoßabsorbierenden Mittel (6) in einem ursprünglich angespannten Zustand in dem Freiraum (14) angeordnet sind, mit einem vollständigen Verbindungsmittel (26) zwischen der mittleren Stützplatte (5) und den elastischen stoßabsorbierenden Mitteln (6) und zwischen der mittleren Stützplatte und der ersten Wand (15),
- wodurch eine erste Seite (19) der Stützmittel (4) mit den elastischen stoßabsorbierenden Mitteln (6) in Kontakt ist, und eine zweite Seite (22) der starren Stützmittel, gegenüber der ersten Seite, durch Kontakt mit einer zweiten Wand der Struktur oder einem Element (30), das mit dem letzteren verbunden ist, verbunden ist, um Teil der ersten Verbindungsmittel (2) zwischen den starren Stützmitteln und der Struktur zu werden, und
- wodurch die elastischen stoßabsorbierenden Mittel (6) mit den starren Stützmitteln (4) und mit der mittleren Stützplatte (5) durch eine vollständige Verbindung verbunden werden, so dass das starre Stützmittel zumindest zwei Positionen einnehmen kann, eine erste Position (7), bezeichnet als nicht-betriebsfähige Position, in der die elastischen stoßabsorbierenden Mittel (6) entspannt sind, und einer zweiten Position (8), die betriebsfähige Position genannt, in der die elastischen stoßabsorbierenden Mittel in einem ursprünglich angespannten Zustand sind, wenn sie mit der zweiten Wand der Struktur oder einem Element, das mit dem letzteren verbunden ist, in Kontakt sind.

2. Struktur nach Anspruch 1,
**dadurch gekennzeichnet,**
**dass** in der betriebsfähigen Position die ersten Verbindungsmittel (2) durch vollständig starre Verbindungsmittel (21) zwischen den starren Stützmitteln (4) und der Struktur (3) ausgebildet sind, wobei die elastischen stoßabsorbierenden Mittel (6) in dem angespannten Zustand in dem Freiraum (14) angeordnet sind, der zwischen den starren Stützmitteln und der ersten Wand eingerichtet ist, zwischen zwei Oberflächen (19, 20) die jeweils den starren Stützmitteln und der ersten Wand gegenüberliegen.

3. Struktur nach einem der Ansprüche 1 bis 2,
**dadurch gekennzeichnet,**
**dass** eine erste Seite (19) der starren Stützmitteln (4) in Kontakt ist mit den elastischen stoßabsorbierenden Mitteln (6), und eine zweite Seite (22) der starren Stützmittel gegenüber der ersten Seite eine Oberfläche ist, die frei ist von jeglichem Kontakt mit einem Element der Struktur (3) oder damit verbunden ist.

4. Struktur nach einem der Ansprüche 1 bis 3,
**dadurch gekennzeichnet,**
**dass** die elastischen stoßabsorbierenden Mittel (6) eine Mehrzahl von Kompressionsfedern (23) enthalten, wobei ein erstes Ende (24) der Kompressionsfedern mit der mittleren Stützplatte (5) in Kontakt ist, und ein zweites Ende (25) der Kompressionsfedern, gegenüber dem ersten Ende, mit den starren Stützmitteln (4) in Kontakt ist.

5. Struktur nach einem der Ansprüche 1 bis 3,
**dadurch gekennzeichnet,**
**dass** die elastischen stoßabsorbierenden Mittel (6) eine Mehrzahl von flexiblen Streifen (9) enthalten.

6. Struktur nach Anspruch 5,
**dadurch gekennzeichnet,**
**dass** die elastischen Streifen (9) der Mehrzahl von Streifen jeweils eine im wesentlichen S- oder Z-förmige Gestalt annehmen, wobei ein erster Zweig (11) des S oder des Z an den starren Stützmitteln (4) befestigt ist, und der zweite Zweig (12) des S oder des Z an der mittleren Stützplatte (5) oder an der Wand befestigt ist.

7. Struktur nach Ansprüchen 5 - 6,
**dadurch gekennzeichnet,**
**dass** die flexiblen Streifen (9) der Mehrzahl von Streifen jeweils in Bezug auf eine Ebene (40) parallel zu der mittleren Stützplatte (5) eine symmetrische Form annehmen.

## Revendications

1. Structure destinée à être connectée à un référentiel par l'intermédiaire de moyens de connexion externes, la structure incluant au moins un appareil (1) qui diffère desdits moyens de connexion externes, ledit appareil permettant de réduire les vibrations de ladite structure (3), et comprenant :
- des moyens de support rigides (4),
- des premiers moyens de connexion (2), entre lesdits moyens de support rigides et ladite structure, de manière à établir un espace libre (14) entre lesdits moyens de support rigides et une première paroi (15) de ladite structure, définissant, au repos, une distance spécifique (16) entre les moyens de support rigides et ladite première paroi, susceptible d'être modifiée sous l'effet d'une vibration de ladite paroi,
- des moyens d'absorption de choc élastiques (6), mis en place dans un état contraint dans l'espace libre établi entre les moyens de support rigides et la première paroi et en contact avec eux, de manière à établir une deuxième connexion élastique (17), entre une partie des moyens de support rigides et une partie de ladite première paroi de la structure, dans la zone de contact avec les moyens d'absorption de choc élastiques,
**caractérisée en ce que** :
- elle inclut une plaque de support intermédiaire (5) disposée, dans ledit espace libre (14), entre lesdits moyens d'absorption de choc élastiques (6) et ladite première paroi (15), lesdits moyens d'absorption de choc élastiques (6) étant mis en place dans un état initialement contraint dans ledit espace libre (14) avec des moyens de connexion complète (26) entre ladite plaque de support intermédiaire (5) et lesdits moyens d'absorption de choc élastiques (6) et entre ladite plaque de support intermédiaire et ladite première paroi (15),
- une première face (19) desdits moyens de support (4) est en contact avec lesdits moyens d'absorption de choc élastiques (6), et une deuxième face (22) desdits moyens de support rigides, opposée à la première face, est connectée, par contact, à une deuxième paroi de ladite structure ou à un élément (30) associé à celle-ci, de manière à venir faire partie desdits premiers moyens de connexion (2) entre les moyens de support rigides et la structure, et
- les moyens d'absorption de choc élastiques (6) sont connectés aux moyens de support rigides (4) et à la plaque de support intermédiaire (5) par une connexion complète, de telle manière que les moyens de support rigides peuvent assumer au moins deux positions, une première position (7), appelée position inopérante, dans laquelle les moyens d'absorption de choc élastiques (6) sont détendus, et une deuxième position (8), appelée position de fonctionnement, dans laquelle les moyens d'absorption de choc élastiques sont dans un état initialement contraint lorsqu'ils sont en contact avec la deuxième paroi de ladite structure ou avec un élément associé à celle-ci.

2. Structure selon la revendication 1, **caractérisée en ce que**, dans la position de fonctionnement, lesdits premiers moyens de connexion (2) sont formés par des moyens de connexion rigide complète (21) entre lesdits moyens de support rigides (4) et ladite structure (3), lesdits moyens d'absorption de choc élastiques (6) étant mis en place dans l'état contraint dans ledit espace (14), établi entre les moyens de support rigides et ladite première paroi, entre deux surfaces (19, 20) faisant face respectivement aux moyens de support rigides et à ladite première paroi.

3. Structure selon l'une quelconque des revendications 1 et 2, **caractérisée en ce qu'**une première face (19) desdits moyens de support rigides (4) est en contact avec lesdits moyens d'absorption de choc élastiques (6), et une deuxième face (22) desdits moyens de support rigides, opposée à la première face, est une surface libre de tout contact avec un élément de la structure (3) ou connectée à celui-ci.

4. Structure selon l'une quelconque des revendications 1 à 3, **caractérisée en ce que** lesdits moyens d'absorption de choc élastiques (6) incluent une pluralité de ressorts de compression (23), une première extrémité (24) desdits ressorts de compression étant en contact avec ladite plaque de support intermédiaire (5), et une deuxième extrémité (25) desdits ressorts de compression, opposée à la première extrémité, étant en contact avec lesdits moyens de support rigides (4).

5. Structure selon l'une quelconque des revendications 1 à 3, **caractérisée en ce que** les moyens d'absorption de choc élastiques (6) incluent une pluralité de rubans flexibles (9).

6. Structure selon la revendication 5, **caractérisée en ce que** les rubans élastiques (9) de la pluralité de rubans ont chacun une forme qui est sensiblement celle d'un S ou d'un Z, un premier bras (11) du S ou du Z étant fixé aux moyens de support rigides (4), et le deuxième bras (12) du S ou du Z étant fixé à la plaque de support intermédiaire (5) ou à ladite paroi.

7. Structure selon les revendications 5 et 6, **caractérisée en ce que** les rubans flexibles (9) de ladite pluralité de rubans ont chacun une forme symétrique par rapport à un plan (40) parallèle à la plaque de support intermédiaire (5).
